# EUROPÄISCHE PATENTSCHRIFT

(11) **EP 2 147 782 B1**
(45) Veröffentlichungstag und Bekanntmachung des Hinweises auf die Patenterteilung: **21.06.2017**
(21) Anmeldenummer: 09009335.2
(22) Anmeldetag: 17.07.2009
(51) Int. Cl.: B32B 21/12

(54) **Verbundplatte**
Composite plate
Plaque composite

(30) Priorität: 21.07.2008 DE 202008009748 U
(43) Veröffentlichungstag der Anmeldung: 27.01.2010
(73) Patentinhaber: Kögel Trailer GmbH & Co. KG, 89349 Burtenbach (DE)
(72) Erfinder: Csapo, Peter, 89356 Haldenwang (DE); Ruhland, Walter, 89081 Ulm (DE); Kling, Michael, 89155 Erbach (DE)
(74) Vertreter: Kilchert, Jochen

(56) Entgegenhaltungen:
- EP-A1- 1 930 138

## Beschreibung

Die Erfindung betrifft eine Verbundplatte für den Ladeboden, die Wände oder das Dach eines Nutzfahrzeugs, insbesondere eines Nutzfahrzeuganhängers.

DE 201 08 858 U1 offenbart eine Möbelbauplatte mit einem Balsakern, der mit mehreren Furnierholzlagen aus Schäl- oder Messerfurnieren verleimt ist. Derartige Möbelbauplatten sind für den Einsatz in Nutzfahrzeugen nicht geeignet, da diese keine ausreichende Tragfähigkeit aufweisen. DE 10 2006 058 445 B3, DE 20 2004 005 479 U1 offenbaren ebenfalls Leichtbauplatten mit einem Balsakern, auf den Außenschichten aus Furnierholzlagen aufgeleimt sind. Auch diese Leichtbauplatten weisen die für den Nutzfahrzeugbau erforderliche Tragfähigkeit nicht auf.

EP 1930138 A1 offenbart eine Leichtbauplatte für die Verwendung in Landfahrzeugen, die ebenfalls eine Balsakern und Furnierholzaußenlagen aufweist. Derartige Platten sind zwar für möbelartige Einbauten in Landfahrzeugen geeignet, nicht jedoch für tragende Laderaumbegrenzungen wie Böden, Dächer oder Wände.

Der Erfindung liegt die Aufgabe zugrunde, eine für den Nutzfahrzeugbau geeignete Verbundplatte in Leichtbauweise anzugeben.

Diese Aufgabe wird erfindungsgemäß durch den Gegenstand des Anspruchs 1 gelöst.

Der Erfindung liegt der Gedanke zugrunde, eine Verbundplatte vorzusehen, die für den Ladeboden, für Wände oder für das Dach eines Nutzfahrzeuges, insbesondere eines Nutzfahrzeuganhängers, geeignet ist. Die Verbundplatte umfasst einen Kern aus Balsaholz, der mit mehrlagigem Baufurniersperrholz verbunden ist. Das Baufurniersperrholz weist eine kernnahe innere Lage, eine Außenlage und wenigstens eine dazwischen angeordnete Zwischenlage auf, wobei die Fasern der inneren Lage und die Fasern der Außenlage jeweils in einer ersten Richtung orientiert sind. Die Fasern der wenigstens einen Zwischenlage sind in einer zweiten Richtung orientiert, die senkrecht zur ersten Richtung verläuft.

Durch die unterschiedliche Faserorientierung der wenigstens einen Zwischenlage bezogen auf die innere Lage und die Außenlage wird eine signifikante Erhöhung der Tragfähigkeit bei gleichzeitig geringem Gewicht der Verbundplatte aufgrund des Kerns aus Balsaholz erreicht. Der erfindungsgemäße Furnieraufbau kann auf beiden Seiten des Balsakerns vorgesehen sein. Alternativ ist es auch möglich, den erfindungsgemäßen Furnieraufbau nur auf einer Seite und auf der anderen Kernseite einen anderen Furnieraufbau vorzusehen.

Bei einer bevorzugten Ausführungsform sind mehrere, insbesondere zwei, drei oder mehr als drei Zwischenlagen zwischen der inneren Lage und der Außenlage angeordnet, wobei die Fasern der mehreren Zwischenlagen jeweils in der zweiten Richtung orientiert sind. Das bedeutet, dass die Fasern der Zwischenlagen parallel und senkrecht zur Faserrichtung der inneren Lage und der Außenlage (erste Richtung) angeordnet sind. Dadurch wird die Tragfähigkeit weiter verbessert.

Die Erfindung ist nicht darauf eingeschränkt, dass alle Zwischenlagen zwischen der inneren Lage und der Außenlage parallele Faserorientierungen aufweisen. Vielmehr können bei einer weiteren erfindungsgemäßen Ausführungsform weitere Zwischenlagen vorgesehen sein, deren Fasern in der ersten Richtung, also parallel zu den Fasern der inneren Lage und der Außenlage orientiert sind. Diese weitere Zwischenlage bzw. mehrere weitere Zwischenlagen können zusätzlich zu der in der zweiten Richtung orientierten Zwischenlage vorgesehen sein. Durch die Kombination unterschiedlicher Zwischenlagen, d.h. Zwischenlagen mit unterschiedlichen Faserorientierungen wird die Möglichkeit geschaffen, die Festigkeit und Flexibilität der Verbundplatte weiter zu beeinflussen.

Die Verbesserung der Tragfähigkeit wird dadurch erreicht, dass erfindungsgemäß wenigstens eine Lage aus einer GFK- und/oder CFK-Fasermatte und/oder aus einer Naturfasermatte vorgesehen ist.

Nachfolgend wird die Erfindung anhand von Ausführungsbeispielen unter Bezug auf die beigefügten schematischen Zeichnungen näher erläutert. In diesen zeigen
- Fig. 1: eine perspektivische Ansicht einer Bodenplatte nach einem erfindungsgemäßen Ausführungsbeispiel; und
- Fig. 2: einen Querschnitt durch die Bodenplatte gemäß Fig. 1.

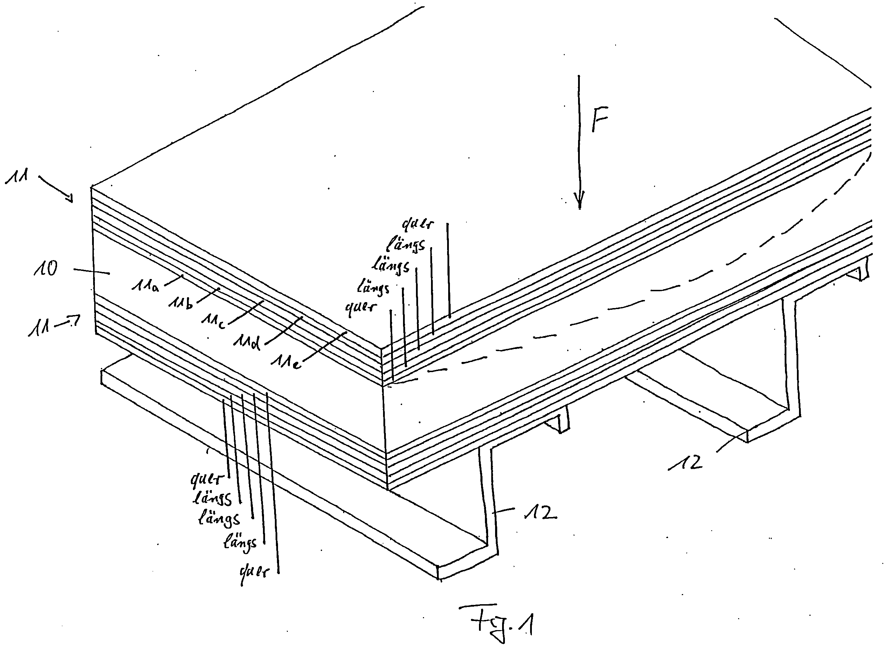

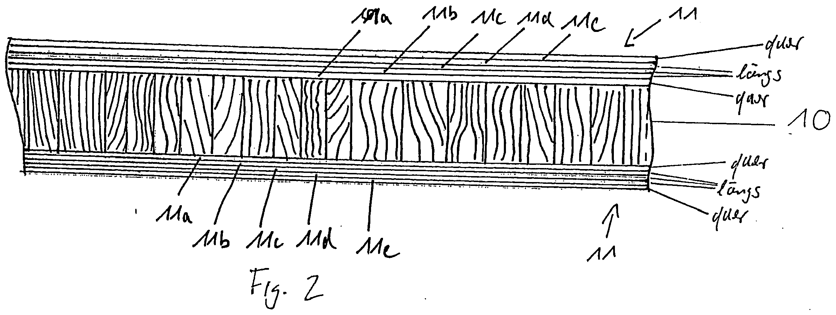

Die Bodenplatte gemäß den Figuren 1 und 2 kommt als Teil eines Ladebodens für ein Nutzfahrzeug, insbesondere ein Nutzfahrzeuganhänger zum Einsatz, wobei mehrere der in den Figuren 1, 2 dargestellten Bodenplatten miteinander kombiniert werden. Die Bodenplatten sind auf Querträgern 12 des Rahmens angeordnet. Die Bodenplatte ist als Leichtbauplatte in Sandwichbauweise ausgeführt und umfasst einen Kern 10 aus Balsaholz mit einer Dichte von ca. 0,1g/cm³ bis 0,2g/cm³. Wie in Fig. 2 zu erkennen, sind die Holzfasern des Kerns 10 senkrecht zur Plattenebene angeordnet. Bei der Verarbeitung des Kerns 10 sind im Hinblick auf die Dickentoleranz keine besonderen Anforderungen zu stellen, die deshalb nicht absolut eben sein muss. Die Dickentoleranz kann bezogen auf die gesamte Platte +/- 2 mm betragen. Dementsprechend groß ist die Toleranz bei der Herstellung des Kerns 10 aus Balsaholz.

Wie in den Figuren 1, 2 zu erkennen, ist der Kern 10 beidseitig mit Baufurniersperrholz 11 verbunden, insbesondere verleimt. Das Baufurniersperrholz 11 umfasst mehrere Lagen 11a, 11b, 11c, 11d, 11e aus Furnierholz, die jeweils einen orientierten Furnieraufbau bilden. Das Baufurniersperrholz 11 auf der in der Einbaulage oberen Kernseite entspricht im Aufbau dem Baufurniersperrholz 11 auf der unteren Kernseite. Das bedeutet, dass bei dem vorliegenden Ausführungsbeispiel die Verbundplatte symmetrisch aufgebaut ist. Die Erfindung ist nicht auf den symmetrischen Aufbau der Verbundplatte beschränkt, sondern umfasst Verbundplatten, bei denen nur eine Seite des Kerns 10 mit einem erfindungsgemäßen Furnieraufbau versehen ist. Beispielsweise ist es möglich, dass nur die Unterseite des Kerns 10 das Baufurniersperrholz gemäß Figuren 1, 2 aufweist und die Oberseite des Kerns 10 einen herkömmlichen Kreuzfurnieraufbau. Andere Kombinationen mit dem erfindungsgemäßen Furnieraufbau sind möglich.

Die kernnahe innere Lage 11a weist eine Faserrichtung auf, die quer zur Längserstreckung der Platte orientiert ist. Die kernferne Außenlage 11e, die die Außenbegrenzung der Verbundplatte bildet, weist ebenfalls eine quer zur Längserstreckung der Bodenplatte verlaufende Faserrichtung auf. Die zwischen der inneren und der äußeren Außenlage 11a, 11e angeordneten Zwischenlagen 11b, 11c, 11d weisen jeweils in Längsrichtung der Bodenplatte verlaufende Faserrichtungen auf (Parallelität). Anstelle der in den Figuren 1, 2 dargestellten drei Zwischenlagen 11b, 11c, 11d können eine Zwischenlage 11b, zwei Zwischenlagen 11c oder mehr als drei Zwischenlagen 11b, 11c, 11d vorgesehen sein. Die Zwischenlagen weisen jeweils die gleiche Faserorientierung auf. Es ist auch möglich, dass die innere und äußere Lage eine Faserrichtung in Längsrichtung der Bodenplatte und die dazwischen angeordneten Lagen Faserrichtungen quer zur Längserstreckung der Bodenplatte aufweisen, also genau umgekehrt wie in Fig. 1.

Generell ist das Baufurniersperrholz 11 zumindest auf einer Kernseite so aufgebaut, dass die innere Lage 11a, die mit dem Kern 10 verbunden ist und die Außenlage 11a, die die begehbare Außenbegrenzung der Platte bildet, Fasern mit demselben Richtungsverlauf aufweisen. Das bedeutet, dass die Faserrichtungen der inneren Lage 11a und der Außenlage 11e im Wesentlichen parallel sind (erste Richtung). Im Wesentlichen senkrecht zu den Fasern der inneren Lage 11a und der Außenlage 11e sind die Fasern der Zwischenlagen 11b, 11c, 11d bzw. allgemein der wenigstens einen Zwischenlage angeordnet, die ihrerseits parallel zueinander verlaufen. Die Fasern der Zwischenlagen 11b, 11c, 11d und der inneren Lage 11a bzw. der Außenlage 11e sind also in unterschiedlichen Richtungen orientiert. Damit ist die Faserorientierung des Furnieraufbaus auch bei anderen Plattengeometrien, beispielsweise bei quadratischen Verbundplatten eindeutig feststellbar.

Die Erfindung ist nicht darauf eingeschränkt, dass alle Zwischenlagen dieselbe Faserrichtung aufweisen, also alle parallel angeordnet sind. Vielmehr können weitere zusätzliche Zwischenlagen vorgesehen sein, die eine andere Orientierung als die senkrecht zu der inneren Lage 11a bzw. der Außenlage 11e orientierten Zwischenlagen 11b, 11c, 11d aufweisen. Beispielsweise kann eine weitere zusätzliche Zwischenlage vorgesehen sein, deren Faserrichtung senkrecht zur Faserrichtung der Zwischenlagen 11b, 11c, 11d verläuft. Die Faserrichtung der weiteren zusätzlichen Zwischenlage (nicht dargestellt) erstreckt sich somit parallel zur Faserrichtung der inneren Lage 11a bzw. der Außenlage 11e. Eine Kombination einer solchen weiteren zusätzlichen Zwischenlage mit den Zwischenlagen 11b, 11c, 11d gemäß Figuren 1, 2 ist möglich.

Die Bodenplatte gemäß Fig. 1 weist eine Dicke von ca. 30 mm auf. Je nach Anzahl der Lagen und/oder je nach Kerndicke können auch weniger als 30 mm oder mehr als 30 mm erreicht werden.

Zusätzlich kann eine oder können mehrere Lagen aus GFK- und/oder CFK-Fasermatten und/oder Naturfasermatten in die Furnierlagen integriert sein bzw. eingeleimt werden. Auf der Oberseite wird die an sich bekannte abriebfeste Siebdruck- und auf der Unterseite eine glatte herkömmliche Beschichtung oder eine mittragende Schicht, jeweils geeignet, eine Wassereinwirkung zu verhindern, aufgetragen. Anstelle des Kerns aus Balsaholz kann eine Wabenbauweise verwendet werden.

Die Platte gemäß Figuren 1, 2 weist eine hohe Festigkeit auf und ist damit hochbelastbar mit Flurfördergeräten. Durch den relativ dicken Balsakern mit geringem Gewicht wird das Gesamtgewicht der Bodenplatte reduziert, die die Schubkräfte durch die stehende Anordnung im Bereich der neutralen Faser des Holzes des Kerns aufnimmt. Das Baufurniersperrholz 11 ist aufgrund des orientierten Aufbaus in geringer Dicke zusammen mit dem Sandwichkern geeignet, hohe Belastungen in Zug- und Druckrichtung aufzunehmen. Die Tragfähigkeit des Plattenelements wird durch die Einbindung von an sich bekannten Fasermatten aus GFK, CFK erhöht.

Die Platte kann auch als Wand- oder Dachelement eingesetzt werden.

### Bezugszeichenliste

- 10: Kern
- 11: Baufurniersperrholz
- 11a: innere Lage
- 11b, c, d: Zwischenlagen
- 11e: Außenlage
- 12: Querträger

## Patentansprüche

1. Verbundplatte für den Ladeboden, für Wände oder für das Dach eines Nutzfahrzeuges mit einem Kern (10) aus Balsaholz, der mit mehrlagigem Baufurniersperrholz (11) verbunden ist, wobei das Baufurniersperrholz (11) eine kernnahe innere Lage (11a) eine Außenlage (11e) und wenigstens eine dazwischen angeordnete Zwischenlage (11b, 11c, 11d) aufweist, wobei die Fasern der inneren Lage (11a) und die Fasern der Außenlage (11e) jeweils in einer ersten Richtung und die Fasern der wenigstens einen Zwischenlage (11b, 11c, 11d) in einer zweiten Richtung orientiert sind, die senkrecht zur ersten Richtung verläuft, wobei wenigstens eine Lage aus einer GFK- und/oder CFK-Fasermatte und/oder aus einer Naturfasermatte vorgesehen ist.

2. Verbundplatte nach Anspruch 1,
**dadurch gekennzeichnet, dass**
mehrere, insbesondere zwei, drei oder mehr als drei Lagen (11b, 11c, 11d) zwischen der inneren Lage (11a) und der Außenlage (11e) angeordnet sind, deren Faserrichtungen jeweils in der zweiten Richtung orientiert sind.

3. Verbundplatte nach Anspruch 1 oder 2,
**dadurch gekennzeichnet, dass**
wenigstens eine weitere Zwischenlage zwischen der inneren Lage (11a) und der Außenlage (11e) angeordnet ist, deren Fasern in der ersten Richtung orientiert sind.

## Claims

1. A composite plate for the loading floor, for walls or for the roof of a commercial vehicle, comprising a core (10) from balsa wood which is connected to multilayer structural plywood (11), wherein the structural plywood (11) has an inner ply (11a) close to the core, an outer ply (11e) and at least one intermediate ply (11b, 11c, 11d) arranged therebetween, wherein the fibers of the inner ply (11a) and the fibers of the outer ply (11e) are each oriented in a first direction and the fibers of the at least one intermediate ply (11b, 11c, 11d) are oriented in a second direction that runs perpendicular to the first direction, wherein at least one ply made from a GFRP- and/or CFRP-mat and/or from a natural-fiber mat is provided.

2. The composite plate according to claim 1,
**characterized in that**
there are arranged between the inner ply (11a) und the outer ply (11e) a plurality of, in particular two, three or more than three plies (11b, 11c, 11d), the directions of the fibers of which are in each case oriented in the second direction.

3. The composite plate according to claim 1 or 2,
**characterized in that**
there is arranged between the inner ply (11a) and the outer ply (11e) at least one further intermediate ply, the fibers of which are oriented in the first direction.

## Revendications

1. Plaque composite pour le plancher de chargement, pour des parois, ou pour le toit d'un véhicule utilitaire avec une âme (10) en bois de balsa, laquelle est en liaison avec un contreplaqué affiné de construction multicouche (11), dans laquelle le contreplaqué affiné de construction (11) présente une couche interne (11a) proche de l'âme, une couche externe (11e), et au moins une couche intermédiaire (11b, 11c, 11d) disposée entre celles-ci,
dans laquelle les fibres de la couche interne (11a) et les fibres de la couche externe (11e) sont respectivement orientés dans une première direction, et les fibres de l'au moins une couche intermédiaire (11b, 11c, 11d) étant orientées dans une deuxième direction qui s'étend perpendiculairement à la première direction,
dans laquelle au moins une couche est prévue en une natte de fibres de plastique renforcé par des fibres de verre et/ou de plastique renforcé par des fibres de carbone et/ou en une natte en fibres naturelles.

2. Plaque composite selon la revendication 1,
**caractérisée en ce que**
plusieurs couches, en particulier deux, trois ou plus de trois couches (11b, 11c, 11d) dont disposées entre la couche interne (11a) et la couche externe (11e), dont les directions des fibres sont respectivement orientées dans la deuxième direction.

3. Plaque composite selon la revendication 1 ou 2,
**caractérisée en ce**
**qu'**au moins une autre couche intermédiaire est disposée entre la couche interne (11a) et la couche externe (11e), dont les fibres sont orientées dans la première direction.
